Europäisches Patentamt

European Patent Office

Office européen des brevets

(11) Veröffentlichungsnummer: **0 236 731**
**A1**

(12) **EUROPÄISCHE PATENTANMELDUNG**

(21) Anmeldenummer: **87101492.4**

(22) Anmeldetag: **04.02.87**

(51) Int. Cl.⁴: **G06K 7/10**

(30) Priorität: **21.02.86 CH 689/86**

(43) Veröffentlichungstag der Anmeldung:
**16.09.87 Patentblatt 87/38**

(84) Benannte Vertragsstaaten:
**CH DE FR IT LI**

(71) Anmelder: **BBC Aktiengesellschaft Brown, Boveri & Cie.**
**Haselstrasse**
**CH-5401 Baden(CH)**

(72) Erfinder: **Johner, Heinz, El.-Ing**
**Dorfstr. 150**
**CH-8424 Embrach(CH)**

(54) Optoelektronischer Lesestift.

(57) Bei einem optoelektronischen Lesestift zur Abtastung von optisch codierten Informationen wird die Stromaufnahme dadurch drastisch verringert, dass anstelle einer internen LED-Lichtquelle Licht aus der Umgebung zur Ausleuchtung des Informationsträgers verwendet wird.

EP 0 236 731 A1

FIG. 2

## Optoelektronischer Lesestift

Die Erfindung betrifft einen optoelektronischen Lesestift gemäss dem Oberbegriff des Anspruchs 1. Ein solcher Lesestift ist z.B. aus der Druckschrift "Hewlett-Packard Journal", Januar 1981, S. 3 -10 bekannt.

Zum schnellen und fehlerfreien Einlesen von grossen Datenmengen, wie sie beispielsweise beim Abbuchen von Artikeln an den Registrierkassen grosser Kaufhäuser mit EDV-geführter Lagerverwaltung anfallen, haben sich seit längerem optoelektronische Lesestifte bewährt, mit denen die optisch codierten Informationen abgetastet werden können.

Als optische Codes werden dabei üblicherweise Balken-oder Strichcodes nach der UPC (Universal Product Code) -bzw. EAN - (European Article Numbering)-Norm verwendet.

Bekannte optoelektronische Lesestifte bestehen im wesentlichen aus einem in einem länglichen Stiftgehäuse untergebrachten optoelektronischen System mit einer nachgeschalteten Signalverarbeitungselektronik. Das optoelektronische System umfasst eine Lichtquelle, meist eine lichtemittierende Diode (LED), einen optoelektronischen Sensor - (Photo diode oder Phototransistor), sowie optische Einrichtungen (Linsen oder dgl.), welche das Licht der Lichtquelle auf einen kleinen Fleck in der Abtastebene bündeln und ebenso das von dem Informationsträger reflektierte Licht sammeln und in den Sensor leiten.

Die Wellenlänge des verwendeten Lichts liegt entweder im sichtbaren Bereich (z.B. 655 nm) oder im Infraroten (z.B. 820 nm). Lichtquelle und Sensor können, wie in der eingangs genannten Druckschrift beschrieben, gemeinsam in ein Gehäuse integriert sein. An der Spitze des Lesestifts auf der Abtastseite werden meist Einsätze aus glattem und abriebfestem Material vorgesehen, um ein leichtes Gleiten und eine lange Lebensdauer des Stiftes zu gewährleisten.

Die in den bekannten Lesestift eingebaute Lichtquelle hat einen vergleichsweise hohen Stromverbrauch, der zu einer Stromaufnahme des gesamten Lesestifts von typischerweise 20 -50 mA führt. Eine Stromaufnahme von dieser Höhe ist solange unkritisch, als der Lesestift an ein stationäres, netzbetriebenes Datenverarbeitungsgerät angeschlossen ist.

Probleme ergeben sich hingegen beim Anschluss des Lesestiftes an kleine, tragbare, batteriebetriebene Datenerfassungsgeräte, bei denen der Stromverbrauch aller Systemteile eine entscheidende Rolle für die Brauchbarkeit und Einsatzfähigkeit des Systems spielt.

Um den Stromverbrauch insgesamt zu verringern, hat man bei dem bekannten Lesestift einen Tast-Schalter vorgesehen, mit dessen Hilfe die Lichtquelle nur beim eigentlichen Lesevorgang kurzzeitig eingeschaltet wird.

Die Tastersteuerung des bekannten Lesestifts führt jedoch dann nicht zu einer wesentlichen Stromeinsparung, wenn der Lesestift nahezu kontinuierlich im Einsatz ist. Darüber hinaus erschwert der Taster die Bedienung des Lesestifts.

Aufgabe der vorliegenden Erfindung ist es nun, einen optoelektronischen Lesestift zu schaffen, der sich zugleich durch eine niedrige Stromaufnahme und eine leichte Bedienbarkeit auszeichnet.

Die Aufgabe wird bei einem Lesestift der eingangs genannten Art durch die Merkmale aus dem Kennzeichen des Anspruchs 1 gelöst.

Der Kern der Erfindung besteht darin, die viel Strom verbrauchende, interne Lichtquelle des Lesestifts vollständig oder zumindestens teilweise dadurch einzusparen, dass zur Beleuchtung des Informationsträgers beim Abtastvorgang Licht aus der Umgebung des Lesestifts verwendet wird.

Gemäss einem bevorzugten Ausführungsbeispiel der Erfindung ist dazu ein hohlzylindrisches Stiftgehäuse aus optisch durchlässigem Material vorgesehen, das Licht aus der Umgebung durch eine hintere Aussenfläche einsammelt, nach Art eines Lichtleiters zur Abtastspitze hin weiterleitet und dort, z.B. in einem konisch zulaufenden Teil, konzentriert.

Weitere Ausführungsbeispiele ergeben sich aus den Unteransprüchen.

Die Erfindung soll nun nachfolgend im Zusammenhang mit der Zeichnung anhand von Ausführungsbeispielen näher erläutert werden. Es zeigen:

Fig. 1 das Beispiel eines Balkencodes und den dazugehörigen zeitlichen Verlauf der Lichtintensität beim gleichförmigen Abtasten dieses Codes;

Fig. 2 ein bevorzugtes Ausführungsbeispiel für einen Lesestift nach der Erfindung und

Fig. 3 das Blockschaltbild für eine helligkeitsgesteuerte Verstärkungsregelung in einem Lesestift nach der Erfindung.

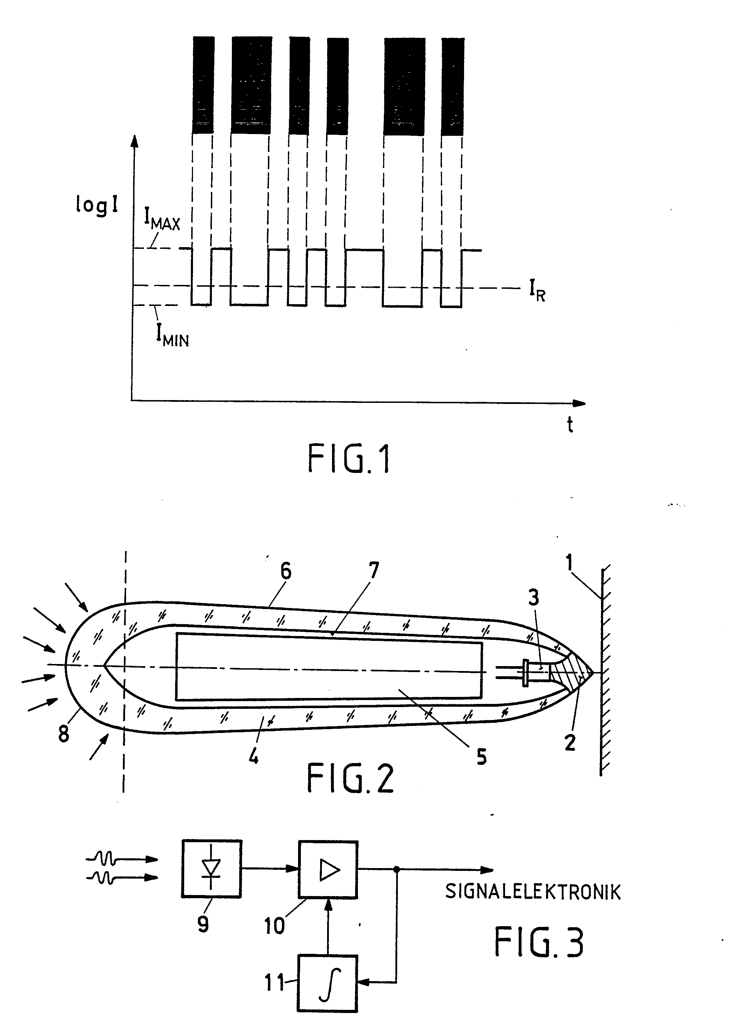

Im oberen Teil der Fig. 1 ist beispielhaft ein Balken-oder Strichcode dargestellt, der durch eine Folge von verschieden breiten, schwarzen, jeweils durch helle Zwischenräume getrennten Balken bzw. Strichen charakterisiert ist. Ein solcher Code soll mit einem optoelektronischen Lesestift abgetastet werden, wie er Gegenstand der Erfindung ist.

Das Abtasten geht in der Regel so vor sich, dass der Benutzer des Lesestifts mit dem Stift in einer bestimmten Richtung über die Strichfolge des Codes hinwegfährt.

Bei gleichförmiger Bewegung des Stiftes sieht dieser, wie im unteren Teil der Fig. 1 wiedergegeben, eine zeitliche Abfolge von Minima $I_{MIN}$ und Maxima $I_{MAX}$ der Lichtintensität I, die den - schwarzen Balken bzw. den hellen · Zwischenräumen entsprechen. Dieses Intensitätsmuster wird von einem optoelektronischen Sensor im Lesestift detektiert und in ein entsprechendes elektrisches Signalmuster umgewandelt, aus dem dann in einer Signalverarbeitungselektronik die codierten Daten extrahiert werden.

Das Verhältnis der Lichtintensitäten $I_{MAX}$ und $I_{MIN}$, d.h. die Differenz in der logarithmischen Auftragung der Fig. 1 hängt im wesentlichen von der optischen Beschaffenheit der schwarzen Balken und der hellen Zwischenräume ab, nicht jedoch von der Intensität der Beleuchtung. Aendert sich daher die Stärke der Beleuchtung, verschiebt sich bei gleichbleibender Beschaffenheit des Balkencodes die gleichbleibende Differenz auf der logarithmischen Skala nach oben oder unten, je nachdem, ob die Beleuchtungsstärke zu oder abnimmt.

Bei den bekannten Lesestiften mit interner Lichtquelle und damit weitgehend gleichbleibender Beleuchtungsintensität muss bei der Auswertung der Signale eine Aenderung der Beleuchtung und eine damit verbundene Aenderung der elektrischen Signalgrössen nicht berücksichtigt werden.

Bei einer bevorzugten Ausführungsform des erfindungsgemässen Lesestiftes ist dagegen eine Regelung des auf den optoelektronischen Sensor folgenden Signalverstärkers in Abhängigkeit von der Helligkeit in der Umgebung des lesestiftes vorgesehen. Hierzu wird eine Referenzintensität $I_R$ benötigt, die beispielsweise, wie in Fig. 1 gestrichelt gezeichnet, zwischen $I_{MIN}$ und $I_{MAX}$ liegt und auf die im weiteren Verlauf noch näher eingegangen wird.

In Fig. 2 ist ein bevorzugtes Ausführungsbeispiel des erfindungsgemässen Lesestiftes dargestellt. Der Lesestift umfasst ein Stiftgehäuse 4 von im wesentlichen hohlzylindrischer Gestalt, das z.B. zur Abtastspitze (in Fig. 2 zur linken Seite) hin konisch zuläuft. Die Abtastspitze selbst wird im Beispiel der Fig. 2 durch eine Saphirspitze 2 gebildet, die eine grosse Gleit-und Widerstandsfähigkeit, vereint mit einer guten optischen Durchlässigkeit, aufweist.

An einen im Gehäuseinneren liegenden Ansatz der Saphirspitze 2 ist ein optoelektronischer Sensor 3 angepasst, der das von dem auf einem Informationsträger 1 angebrachten Balkencode reflektierte Licht, welches durch die Saphirspitze 2 ins Innere des Stiftgehäuses 4 gelangt, empfängt und in ein elektrisches Signal umwandelt. In dem durch das Stiftgehäuse 4 gebildeten Hohlraum ist zweckmässigerweise eine signalverarbeitende Elektronik 5 untergebracht, welche die Ausgangssignale des optoelektronischen Sensors 3 so weiterverarbeitet, dass am Ausgang des Lesestifts die Daten in einer EDV-kompatiblen Form zur Verfügung stehen.

Das Stiftgehäuse 4 selbst ist aus einem optisch durchlässigen Material gefertigt. Die optische Durchlässigkeit bezieht sich dabei auf denjenigen Wellenlängenbereich, der als Arbeitsbereich des betreffenden optoelektronischen Sensors in Frage kommt. Ist der Sensor also für Infrarot-Detektion ausgelegt, sollte das Material entsprechend im Infrarotbereich eine ausreichende optische Durchlässigkeit aufweisen.

Für den sichtbaren Teil des Spektrums kommen als geeignete Materialien für das Stiftgehäuse insbesondere Glas, Acrylglas oder Polystyrol in Betracht. Zu berücksichtigen ist jedoch auch die mechanische Festigkeit, wenn der Lesestift beispielsweise für einen rauhen Ausseneinsatz vorgesehen ist.

Im mittleren Teil bildet das Stiftgehäuse 4 eine Art Lichtleiter, in dem einmal eingefangenes Licht durch Totalreflektion weitergeleitet wird. Diese lichtleitenden Eigenschaften des Stiftgehäuses 4 werden vorzugsweise dadurch unterstützt und verbessert, dass die seitliche Aussenfläche 6 und/oder die seitliche Innenfläche 7 zumindest poliert, besser noch zusätzlich verspiegelt, ausgeführt ist.

Zur Aufnahme von Licht aus der Umgebung des Lesestiftes ist im Beispiel der Fig. 2 die hintere Aussenfläche 8 des Stiftgehäuses halbkugelförmig gewölbt ausgebildet und vorzugsweise mit einer optisch trüben Oberfläche ausgestattet, um, wie durch die Pfeile in Fig. 2 angedeutet, Streulicht empfangen zu können.

Das über die hintere Aussenfläche 8 etwa bis zur senkrechten gestrichelten Linie empfangene Licht wird, wie bereits erwähnt, nach Art eines Lichtleiters durch den Mittelteil des Stiftgehäuses 4 in die konisch zulaufende Spitze hineingeleitet, dort in die Saphirspitze 2 eingekoppelt und dient dann, auf eine kleine Fläche konzentriert, zur Beleuchtung der auf dem Informationsträger 1 angeordneten Striche.

Statt der hinteren Aussenfläche 8 im Beispiel der Fig. 2 könnte zum Einfangen des Umgebungslichtes ebensogut ein Teil der seitlichen Aussenfläche 6 benutzt werden, indem dort anstelle einer polierten und verspiegelten Oberfläche eine optisch rauhe Oberfläche vorgesehen wird.

Desgleichen liegt es im Rahmen der Erfindung, die Saphirspitze 2 entweder durch eine Spitze aus anderem Material oder anderer Ausgestaltung zu ersetzen oder ganz wegzulassen, sofern nur die optische Auslegung der Spitze so getroffen wird, dass das eingefangene Licht aus der Umgebung an der Spitze auf die abzutastende Fläche konzentriert und das reflektierte Licht in den optoelektronischen Sensor 3 eingestrahlt wird.

Weiterhin liegt es auch im Rahmen der Erfindung, neben der Beleuchtung durch Umgebungslicht hilfsweise eine zusätzliche interne Lichtquelle wie bei den bekannten Lesestiften vorzusehen, die nur dann, möglicherweise automatisch, eingeschaltet wird, wenn die Elektronik des Lesestiftes feststellt, dass die Helligkeit der Umgebung nicht ausreicht, um ein fehlerfreies Abtasten des Codes zu ermöglichen.

Im Zusammenhang mit der sich ändernden Helligkeit in der Umgebung des Lesestiftes ist gemäss einer weiteren bevorzugten Ausführungsform der Erfindung (Fig. 3) dem optoelektronischen Sensor 9 ein regelbarer Verstärker 10 nachgeschaltet, dessen Verstärkungsfaktor in Abhängigkeit von der Helligkeit eingestellt und nachgeregelt wird. Sinkt also z.B. die Helligkeit in der Umgebung des Lesestiftes, wird der Verstärkungsfaktor entsprechend erhöht und umgekehrt.

Diese automatische Regelung kann nun wie folgt auf einfache Weise realisiert werden: Im Zusammenhang mit der Erläuterung zu Fig. 1 wurde bereits darauf hingewiesen, dass das Verhältnis der Intensitäten $I_{MAX}$ und $I_{MIN}$ bei gleichbleibendem Code zwar gleichbleibt, wenn sich die Umgebungshelligkeit ändert, dass sich jedoch beide Werte auf der logarithmischen Skala um gleiche Strecken mit der Helligkeit verschieben. Wird nun über das Signalmuster der Fig. 1 integriert, erhält man einen Wert für eine Referenzintensität, der zwischen $I_{MIN}$ und $I_{MAX}$ liegt und direkt mit der Umgebungshelligkeit korreliert ist.

Aus diesem Grunde wird in der Schaltung gemäss Fig. 3 das verstärkte Ausgangssignal des regelbaren Verstärkers 10, das dem Signalmuster aus Fig. 1 entspricht, auf den Eingang eines Integrators 11 gegeben. Das Ausgangssignal des Integrators 11 wird als Referenzgrösse dann zum Einstellen und Nachregeln des Verstärkungsfaktors auf den Regeleingang des regelbaren Verstärkers 10 weitergeleitet. Auf diese Weise wird auch bei wechselnden Lichtverhältnissen stets ein gleichbleibender Signalpegel am Ausgang des Lesestiftes sichergestellt.

Insgesamt ergibt sich nach der Erfindung ein optoelektronischer Lesestift, der sich durch eine äusserst geringe Stromaufnahme, einfache Realisierbarkeit und einfache Handhabung auszeichnet.

## Ansprüche

1. Optoelektronischer Lesestift zum Abtasten von optisch codierten, auf einem Informationsträger angebrachten Informationen, insbesondere in Form eines Balken-oder Strichcodes, welcher Lesestift Mittel zum Beleuchten des Informationsträgers enthält sowie einen optoelektronischen Sensor, der das vom Informationsträger reflektierte Licht aufnimmt und in ein elektrisches Signal umwandelt, dadurch gekennzeichnet, dass die Mittel derart ausgebildet sind, dass zum Beleuchten Licht aus der Umgebung des Lesestifts verwendet wird.

2. Optoelektronischer Lesestift nach Anspruch 1, dadurch gekennzeichnet, dass zum Beleuchten ausschliesslich Licht aus der Umgebung des Lesestifts verwendet wird.

3. Optoelektronischer Lesestift nach Anspruch 2, dadurch gekennzeichnet, dass die Mittel derart ausgebildet sind, dass das Licht aus der Umgebung gesammelt und konzentriert wird.

4. Optoelektronischer Lesestift nach Anspruch 3, dadurch gekennzeichnet, dass der Lesestift ein im wesentlichen hohlzylindrisches Stiftgehäuse (4) aus einem optisch durchlässigen Material aufweist, in welches Stiftgehäuse (4) durch eine Aussenfläche Licht aus der Umgebung eintreten kann, im Stiftgehäuse (4) zur Abtastseite hin weitergeleitet und dort konzentriert wird.

5. Optoelektronischer Lesestift nach Anspruch 4, dadurch gekennzeichnet, dass das Stiftgehäuse (4) zur Abtastseite hin konisch zuläuft.

6. Optoelektronischer Lesestift nach Anspruch 4, dadurch gekennzeichnet, dass als Aussenfläche für den Eintritt des Lichts eine hintere Aussenfläche (8) des Stiftgehäuses (4) ausgewählt ist, und dass die Oberfläche der hinteren Aussenfläche (8) optisch trübe ist.

7. Optoelektronischer Lesestift nach Anspruch 4, dadurch gekennzeichnet, dass das Stiftgehäuse (4) aus Glas, Acrylglas oder Polystyrol besteht.

8. Optoelektronischer Lesestift nach Anspruch 6, dadurch gekennzeichnet, dass die seitliche Innenfläche (7) und die seitliche Aussenfläche (6) des Stiftgehäuses (4) poliert oder zusätzlich verspiegelt sind.

9. Optoelektronischer Lesestift nach Anspruch 1, dadurch gekennzeichnet, dass zur Verarbeitung des aus dem optoelektronischen Sensor (3, 9) stammenden Signals ein regelbarer Verstärker (10) vorgesehen ist, dessen Verstärkungsfaktor in Abhängigkeit von der Helligkeit in der Umgebung des Lesestifts eingestellt und nachgeregelt wird.

10. Optoelektronischer Lesestift nach Anspruch 9, dadurch gekennzeichnet, dass dem regelbaren Verstärker (10) ein Integrator (11) nachgeschaltet ist, welcher das Ausgangssignal des regelbaren Verstärkers (10) mittelt und den gewonnenen Mittelwert zur Einstellung des Verstärkungsfaktors an den regelbaren Verstärker (10) weiterleitet.

FIG.1

FIG.2

SIGNALELEKTRONIK

FIG.3

Europäisches
Patentamt

**EUROPÄISCHER RECHERCHENBERICHT**

Nummer der Anmeldung

EP 87 10 1492

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 8, Nr. 157 (P-288)[1594], 20. Juli 1984; & JP-A-59 53 974 (NORIKO IKEGAMI) 28-03-1984 * Zusammenfassung * | 1-3 | G 06 K 7/10 |
| Y | Idem --- | 4,5,9 | |
| Y | FR-A-2 271 618 (PLESSEY HANDEL UND INVESTMENTS) * Figur 1; Seite 1, Zeile 22 - Seite 4, Zeile 8 * | 4,5,9 | |
| A | --- | 6-8,10 | |
| A,D | HEWLETT-PACKARD JOURNAL, Band 32, Nr. 1, Januar 1981, Seiten 3-10; J.J. UEBBING et al.: "Handheld scanner makes reading bar codes easy and inexpensive" ----- | 1 | RECHERCHIERTE SACHGEBIETE (Int. Cl.4) G 06 K |

Der vorliegende Recherchenbericht wurde für alle Patentansprüche erstellt.

| Recherchenort | Abschlußdatum der Recherche | Prüfer |
|---|---|---|
| DEN HAAG | 11-06-1987 | GYSEN L.A.D. |